# FASCICULE DE BREVET EUROPEEN

(11) **EP 3 089 846 B1**
(45) Date de publication et mention de la délivrance du brevet: **13.02.2019**
(21) Numéro de dépôt: 14831008.9
(22) Date de dépôt: 22.12.2014
(51) Int. Cl.: B23Q 9/00, F16L 19/00, F16L 33/01

(54) **MÉTHODE DE MONTAGE D'UN EMBOUT DE FIXATION D'UNE CONDUITE TUBULAIRE FLEXIBLE ET INSTALLATION DE MISE EN OEUVRE**
VERFAHREN ZUR MONTAGE EINES ENDSTÜCKS ZUR BEFESTIGUNG EINES FLEXIBLEN ROHRS UND VORRICHTUNG ZUR DURCHFÜHRUNG DES VERFAHRENS
METHOD FOR MOUNTING AN ENDPIECE FOR SECURING A FLEXIBLE TUBULAR PIPE AND APPARATUS FOR IMPLEMENTING SAME

(30) Priorité: 30.12.2013 FR 1363719
(43) Date de publication de la demande: 09.11.2016
(73) Titulaire: Technip France, 92400 Courbevoie (FR)
(72) Inventeur: DEHAIS, Romuald, F-76490 Saint-Arnoult (FR); PECKEU, Grégory, F-27310 Bourg-Achard (FR)
(74) Mandataire: Gendron, Vincent Christian
(86) Numéro de dépôt international: PCT/FR2014/053522
(87) Numéro de publication internationale: WO 2015/101740

(56) Documents cités:
- WO-A1-2004/079248
- WO-A1-2012/045912
- FR-A1- 2 760 813
- FR-A1- 2 816 389
- US-A- 2 537 916
- US-A- 5 189 933

## Description

La présente invention se rapporte à une méthode de montage d'un embout de fixation d'une conduite tubulaire flexible selon le préambule de la revendication 1 et à une installation destinée à mettre en oeuvre une telle méthode de montage selon le préambule de la revendication 8.

Une telle méthode est connue du document FR 2 816 389 A1 et une telle installation est connue du document US 5 189 933 A.

Les conduites tubulaires flexibles dites « non liées », décrites dans les documents normatifs API 17J, «Spécification for Unbonded Flexible Pipe» et API RP 17B, «Recommended Practice for Flexible Pipe» publiés par l' «American Petroleum Institute», comprennent plusieurs couches superposées en matériaux métalliques et en matériaux plastiques, leur conférant leurs propriétés mécaniques et leurs propriétés d'étanchéité vis-à-vis de l'hydrocarbure qu'elles transportent et du milieu environnant.

Aussi, elles comprennent généralement, de l'intérieur vers l'extérieur, une carcasse métallique faite d'un feuillard en spirale agrafé, une gaine de pression en matériau polymère, un enroulement hélicoïdal à pas court d'un fil métallique formant une voûte de pression, au moins une nappe d'armures métalliques de traction enroulées à pas long autour de ladite voûte de pression, et une gaine de protection externe en matériau polymère. Ces conduites peuvent aussi comporter dans certains cas une gaine intermédiaire en matériau polymère.

Ces conduites sont ainsi étanches, et il convient de monter à leurs extrémités des embouts de fixation étanches également. Il doit en être impérativement ainsi entre l'embout et la gaine de pression, à l'intérieur de laquelle circule l'hydrocarbure. Dans le cas où la conduite comporte une gaine intermédiaire, celle-ci doit aussi être impérativement raccordée de façon étanche avec l'embout. L'étanchéité de la gaine externe est moins importante que celle de la gaine de pression et de la gaine intermédiaire, car la plupart des conduites flexibles sont conçues pour résister durablement à une perte d'étanchéité de la gaine externe. Cependant, il est préférable que la gaine externe soit elle aussi étanche et raccordée de façon étanche à l'embout, notamment lorsque la conduite est destinée à une application sous-marine, ceci afin d'éviter que de l'eau de mer ne pénètre à l'intérieur de la paroi de la conduite et ne vienne corroder les armures métalliques.

L'extrémité de chaque gaine est raccordée à l'embout grâce à un procédé de sertissage à froid, procédé consistant à comprimer radialement la paroi de la gaine entre deux pièces métalliques appliquées contre sur les faces interne et externe de la gaine. La pièce métallique appliquée contre la face interne de la gaine consiste généralement en une canule formée d'une bague. La canule est emmanchée à l'intérieur de l'extrémité de la gaine, en contact direct avec la face interne de cette dernière et autour des éventuelles couches situées à l'intérieur de cette dernière. L'embout vient alors coiffer l'extrémité de la conduite et des éléments de coincement annulaires sont alors appliqués contre la face externe de l'extrémité de la gaine en face de la canule, puis ces éléments de coincement annulaire sont entraînés et maintenus à force entre le corps de l'embout et la canule en venant comprimer l'épaisseur de la gaine pour assurer l'étanchéité.

L'étanchéité du raccordement dépend de l'intensité et de l'homogénéité de cette compression annulaire de l'extrémité de la gaine.

Aussi, pour que l'étanchéité du raccordement soit satisfaisante, il est nécessaire de veiller à obtenir une épaisseur de gaine constante et homogène au niveau de l'extrémité à l'intérieur de laquelle est emmanchée la canule. Car en effet, de par leur procédé de fabrication, les gaines extrudées présentent des tolérances dimensionnelles médiocres, et en particulier s'agissant de leur épaisseur. Ainsi, par exemple, l'écart entre les épaisseurs maximale et minimale de la gaine dans la zone de sertissage peut être supérieur à trois millimètres, ce qui est excessif pour garantir la qualité du sertissage. Pour pallier ce problème, après que la canule a été emmanchée, on vient mesurer l'épaisseur de la gaine dans toute la zone entourant la canule, afin de déterminer la position et l'amplitude des extrema d'épaisseur. Ces mesures d'épaisseur sont généralement réalisées par échographie ultrasonore. Ensuite, on vient araser à l'aide d'un outil à main du type râpe ou ponceuse la bordure externe de l'extrémité de la gaine de de façon à réduire l'épaisseur de la gaine dans les zones présentant une épaisseur maximale. Les étapes de mesure et d'arasage doivent être répétées plusieurs fois jusqu'à ce que l'épaisseur de la gaine soit sensiblement constante, à cinq dixièmes de millimètre près, dans la zone entourant la canule.

Une telle méthode est non seulement peu reproductible, mais aussi extrêmement longue, pénible et couteuse. De plus, elle requiert un opérateur très expérimenté, faute de quoi on risque un défaut d'étanchéité au niveau de l'embout.

Aussi, un problème qui se pose et que vise à résoudre la présente invention, est de fournir une méthode qui permette d'obtenir une meilleure étanchéité des embouts de fixation des conduites tubulaires flexibles.

Dans ce but, et selon un premier objet, la présente invention propose une méthode de montage d'un embout de fixation d'une conduite tubulaire flexible selon la revendication 1, ladite méthode étant du type comprenant les étapes suivantes : a) on fournit, d'une part un embout et une bague présentant une surface externe cylindrique de révolution et deux extrémités cylindriques opposées, et d'autre part une gaine présentant une extrémité de gaine et une bordure circulaire externe située au niveau de ladite extrémité de gaine ; tout d'abord, b) on emmanche ladite bague à l'intérieur de ladite extrémité de gaine ; puis c) on arase ladite bordure externe pour former une bordure arasée de symétrie cylindrique de révolution sensiblement coaxiale à ladite surface externe cylindrique ; et, d) on vient coiffer ladite bordure arasée avec ledit embout pour pouvoir sertir ladite extrémité de gaine entre ladite bague et ledit embout. A l'étape b) on emmanche ladite bague en laissant une desdites deux extrémités s'étendre en dehors de ladite extrémité de gaine, et à l'étape c), on arase ladite bordure externe à une distance radiale donnée de ladite surface externe cylindrique en prenant appui sur ladite une desdites deux extrémités de bague.

Ainsi, une caractéristique de la méthode selon l'invention réside dans l'usinage de la bordure externe de la gaine en matière plastique correspondant à la zone dans laquelle est engagée la bague, ou canule, en prenant appui précisément sur cette bague. Pour ce faire, il est nécessaire que l'une de ses extrémités vienne s'étendre librement sensiblement en saillie de l'extrémité de la gaine. Car en effet, à l'intérieur de la bague, d'autres couches de la conduite viennent s'étendre, par exemple la carcasse pour une gaine interne de pression ou bien toutes les autres couches de la conduite pour une gaine externe. De la sorte, en prenant appui sur l'extrémité de la bague en saillie, on vient aisément se repérer pour déterminer l'épaisseur de la gaine qui s'étend autour de la surface externe cylindrique de révolution de la bague.

Un repérage par rapport à l'intérieur de la conduite aurait bien évidemment été possible. Cependant, la surface interne de la conduite n'est pas nécessairement de symétrie circulaire, ni parfaitement régulière. Au surplus elle n'est pas nécessairement coaxiale avec la surface externe cylindrique de révolution de la bague. En outre, la bordure externe de la gaine devant être arasée peut être relativement éloignée de l'extrémité de la conduite, par exemple à plus de 1 mètre dans le cas d'une gaine externe, et de plus la conduite flexible n'est pas nécessairement parfaitement rectiligne entre son extrémité et la zone devant être arasée. Aussi, une machine d'usinage centrée par rapport à l'intérieur de l'extrémité de la conduite ne permettrait pas d'usiner la bordure circulaire externe de la gaine de manière à obtenir une épaisseur de gaine constante au niveau de son extrémité à l'intérieur de laquelle est engagée la bague.

Selon un mode de mise en oeuvre de l'invention particulièrement avantageux, on fournit à l'étape c), d'usinage proprement dit, un outil de coupe et on maintient ledit outil de coupe contre ladite bordure externe à ladite distance radiale donnée de ladite surface externe cylindrique, tandis qu'on entraine ledit outil de coupe en rotation autour de ladite bague. Ainsi, la position relative de l'outil de coupe et de la surface externe cylindrique de révolution de la bague est réglée et est maintenue constante selon une direction radiale, tandis que l'outil de coupe est entraîné en rotation, tout en conservant un appui sur l'extrémité de bague étendue en dehors de l'extrémité de gaine. De la sorte, grâce à l'outil de coupe on vient usiner le matériau de la gaine au niveau de la bordure circulaire externe de manière à réduire sensiblement son épaisseur pour l'uniformiser sur toute la circonférence de la bordure circulaire externe.

Avantageusement, on entraîne en outre ledit outil de coupe en translation selon la direction axiale de ladite bague. De la sorte, on vient usiner toute la surface définie par la bordure circulaire externe cylindrique à la même cote. Ainsi, l'épaisseur de gaine devient constante au niveau de la bordure circulaire. Partant, il est aisé de venir comprimer uniformément l'extrémité de gaine coaxialement entre la bague et l'embout pour obtenir une parfaite étanchéité.

De préférence, on entraîne ledit outil de coupe en translation d'une amplitude de course donnée à chaque tour dudit outil de coupe. Ainsi, en entraînant en translation d'un pas correspondant à l'amplitude l'outil de coupe à chaque tour, la surface cylindrique correspondant à la bordure circulaire externe est uniformément usinée.

De préférence, on fournit une bague présentant une gorge de guidage sur ladite une desdites deux extrémités de bague. De la sorte, et ainsi qu'on l'expliquera ci-après plus en détail, il est plus aisé de guider le point d'appui sur l'extrémité de bague. En outre, de préférence, on fournit une bague dont ladite une desdites deux extrémités de bague présente un collet d'appui. Ainsi, la bague est renforcée localement ce qui permet de lui assurer une totale rigidité lorsque l'on prend appui dessus. Bien entendu, la surface d'appui formée par le collet est de symétrie cylindrique de révolution et est coaxiale à la surface cylindrique de la bague. Avantageusement, on fournit une bague présentant ladite gorge de guidage ménagée sur ledit collet d'appui.

Selon un autre objet, un mode de réalisation concerne une bague pour la mise en oeuvre de la méthode décrite ci-dessus, ladite bague comprenant deux extrémités cylindriques opposées, et l'une desdites deux extrémités présente un collet et une gorge radiale ménagée dans ledit collet.

Selon un autre objet, la présente invention propose une installation pour le montage d'un embout de fixation d'une conduite tubulaire flexible selon la revendication 8, ladite conduite tubulaire flexible comprenant, d'une part une gaine présentant une extrémité de gaine et une bordure circulaire externe située au niveau de ladite extrémité de gaine, et d'autre part une bague présentant une surface externe cylindrique de révolution et deux extrémités cylindriques opposées, ladite bague étant emmanchée à l'intérieur de ladite extrémité de gaine en laissant une desdites deux extrémités s'étendre en dehors de ladite extrémité de gaine. L'installation comprend d'une part un outil de coupe et d'autre part un organe d'appui apte à prendre appui sur ladite une desdites extrémités de bague pour maintenir ledit outil de coupe contre ladite bordure externe à une distance radiale donnée de ladite surface externe cylindrique; et ledit outil de coupe est destiné à être entraîné en rotation autour de ladite bague, de manière à araser ladite bordure externe pour former une bordure arasée de symétrie cylindrique de révolution sensiblement coaxiale à ladite surface externe cylindrique.

Selon une caractéristique de l'invention particulièrement avantageuse, l'installation comprend, d'une part une roue d'entraînement présentant un axe de symétrie et une bordure périphérique, et d'autre part un bras support monté sur ladite bordure périphérique et s'étendant sensiblement parallèlement audit axe de symétrie, et ledit organe d'appui et ledit outil de coupe sont montés sur ledit bras support. Ainsi, la roue d'entraînement est ajustée en regard de l'extrémité de la gaine équipée de sa bague de façon que son axe de symétrie soit confondu avec l'axe de la conduite tubulaire flexible. Partant, le bras support est apte à venir s'étendre parallèlement à l'axe de la gaine et en regard de sa bordure circulaire externe. En outre, il s'étend au droit de l'extrémité cylindrique de la bague étendue librement en dehors de l'extrémité de gaine. Partant, l'outil de coupe monté sur le bras support peut venir en contact avec la bordure externe de la gaine, tandis que l'organe d'appui peut venir prendre appui sur l'extrémité cylindrique libre de la bague.

De plus, ledit bras support est monté mobile en translation sur ladite roue d'entraînement selon une direction radiale. Une telle caractéristique permet de compenser le défaut de coaxialité de la roue d'entraînement, avec la surface externe cylindrique de révolution de la bague. Au surplus, l'installation comprend des organes élastiques pour contraindre ledit bras support vers le centre de ladite roue. De la sorte, durant la rotation de la roue d'entraînement et du bras support, l'organe d'appui demeure en contact permanent avec l'extrémité cylindrique libre de la bague.

Avantageusement, ledit outil de coupe est monté mobile en translation sur ledit bras support selon une direction parallèle audit axe de symétrie, de manière à pouvoir usiner toute la surface de la bordure circulaire externe de la gaine. On expliquera plus en détail dans la suite de la description le mode de liaison entre l'outil de couper le bras support, et surtout le mode de commande d'entraînement en translation de l'outil de coupe.

Selon une caractéristique de l'invention préférée, ledit organe d'appui comporte un galet présentant un axe de rotation sensiblement parallèle audit axe de symétrie. Le galet vient alors rouler sur l'extrémité de bague étendue en dehors de l'extrémité de gaine lorsque le bras support est entraîné en rotation autour de la bordure circulaire externe. L'extrémité de bague forme ainsi un chemin de roulement circulaire. Un tel appui roulant permet de diminuer les frottements entre l'organe d'appui et l'extrémité de bague, ce qui permet de diminuer les efforts à fournir pour entraîner en rotation le bras support.

Aussi, et de manière particulièrement avantageuse, l'installation comprend un support apte à recevoir ladite roue, ledit support étant destiné à maintenir ladite roue et ladite conduite tubulaire flexible sensiblement coaxialement. Ainsi, la roue d'entraînement est montée mobile en rotation sur le support qui est avantageusement lui-même circulaire. On décrira plus précisément dans la suite de la description les caractéristiques du support.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 est une vue schématique partielle en écorché d'une conduite tubulaire flexible ;
- la Figure 2 est une vue schématique en coupe axiale montrant partiellement des éléments de conduite tubulaire flexible et une installation conforme à l'invention ;
- la Figure 3 est une vue schématique en perspective montrant partiellement l'installation représentée sur la figure 2 ;
- la Figure 4 est une vue schématique en élévation de l'installation représentée sur la figure 3 ;
- la Figure 5 est une vue schématique en coupe hémi-axiale d'un embout de fixation d'une conduite tubulaire flexible ;
- la Figure 6 est une vue schématique de détail de la figure 5 ; et,
- les Figures 7A à 7N représentent un détail de la vue schématique représentée sur la Figure 6, selon une pluralité de variantes de réalisation.

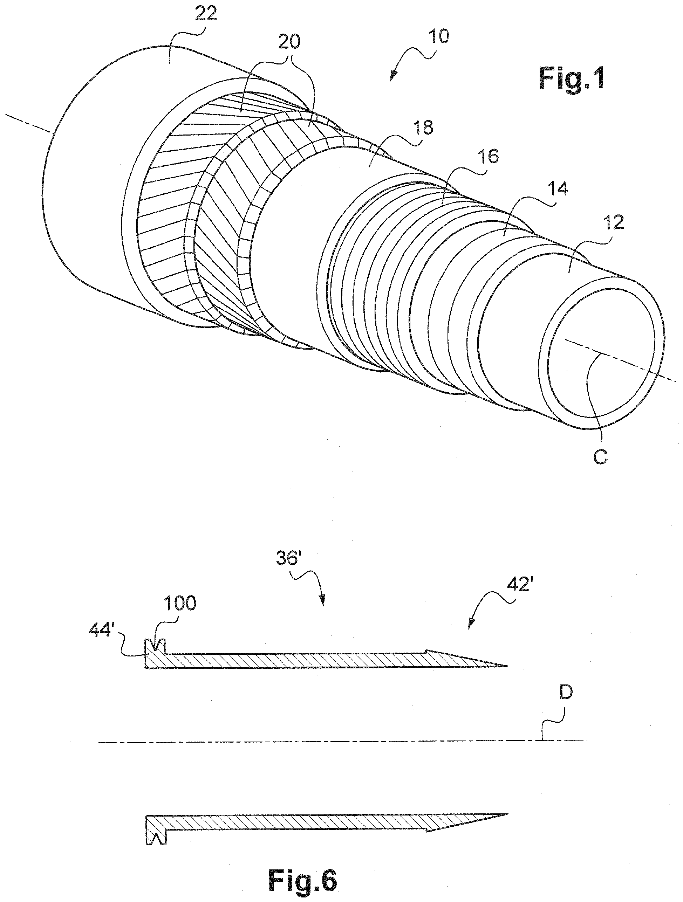

La Figure 1 illustre en écorché une conduite tubulaire flexible 10 présentant un axe de conduite C. Elle comporte différentes couches superposées qui forment la conduite et celles-ci sont successivement réalisées les unes sur les autres, de l'intérieur de la conduite vers l'extérieur. L'intérieur forme un espace d'écoulement interne de l'hydrocarbure.

Ainsi, la conduite tubulaire flexible 10 comprend, de l'intérieur vers l'extérieur, une gaine d'étanchéité interne en matériau polymère 12, une voûte métallique 14 constituée par l'enroulement en hélice à pas court d'au moins un fil métallique de forme, par exemple en zeta auto-agrafé, le cas échéant une frette 16 constituée par un enroulement à pas court d'un fil rectangulaire, une gaine intermédiaire 18 anti-écrasement, (anti-"collapse") en langue anglaise, une armure 20 résistant à la traction axiale dans le sens longitudinal de la conduite et constituée d'une paire de nappes d'armures croisées d'enroulement à pas long en sens contraire, et une gaine d'étanchéité externe en matériau polymère 22. La gaine d'étanchéité interne 12 est aussi appelée gaine de pression. La gaine d'étanchéité externe 22 est aussi appelée gaine externe. La voûte métallique 14 et la frette 16 constituent la voûte de pression 14,16 de la conduite 10. La fonction principale de la voûte de pression 14,16 est de reprendre les efforts liés à la pression du fluide circulant dans la conduite 10.

La conduite 10 représentée à la figure 1 est dite à passage lisse (« smooth bore » en langue anglaise) car sa première couche en partant de l'intérieur est un tube polymérique présentant une surface interne lisse. Ce type de conduite comporte une gaine intermédiaire anti-écrasement 18 afin de protéger la gaine interne 12 en cas de perte d'étanchéité de la gaine externe 22. En effet, lorsque la conduite 10 est immergée une perte accidentelle d'étanchéité de la gaine externe 22 provoque l'inondation de l'intérieur de la paroi de la conduite. Dans ce cas, l'eau de mer est arrêtée par la gaine intermédiaire étanche 18, cette dernière étant capable de reprendre la pression hydrostatique car elle supportée par la voûte de pression 14,16. De la sorte, la pression hydrostatique ne s'applique pas sur la face externe de la gaine de pression 12 et ne peut provoquer l'écrasement de cette gaine.

L'invention pourrait aussi s'appliquer à des conduites dites à passage non lisse (« rough bore » en langue anglaise). Ces conduites comportent une carcasse métallique située à l'intérieur de la gaine de pression 12. Cette carcasse est généralement constituée d'un feuillard métallique spiralé, profilé et agrafé, sa fonction principale étant de reprendre les efforts liés à la pression hydrostatique.

Les conduites flexibles du type précité doivent être raccordées de manière étanche à leurs extrémités.

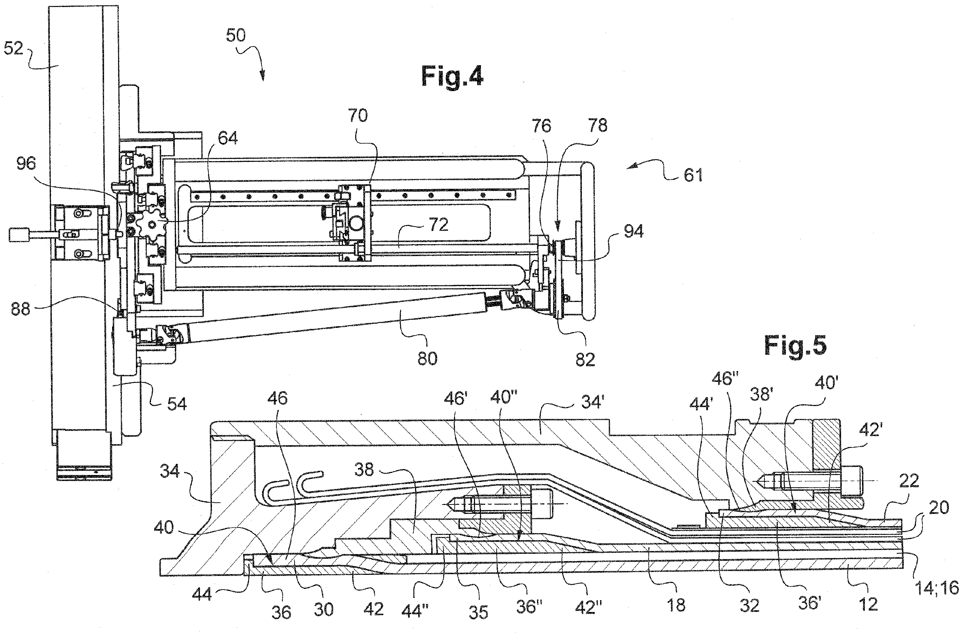

On se reportera sur la figure 5, illustrant en coupe hémi-axiale, l'extrémité de la conduite 10 équipée présentant, en avant une extrémité 30 de la gaine de pression 12, et en arrière, une extrémité 32 de la gaine d'étanchéité externe 22. L'extrémité de gaine de pression 30 est emmanchée à l'intérieur d'un embout de fixation 34, tandis qu'une première bague 36, ou canule, est elle-même emmanchée à l'intérieur de l'extrémité de gaine de pression 30. L'extrémité de gaine de pression 30 est sertie entre l'embout 34 et la première bague 36 au moyen d'une pièce annulaire biconique étagée 38.

La première bague, ou canule, 36, présente une première surface externe cylindrique de révolution 40, et une première extrémité interne chanfreinée 42 opposée à une première extrémité externe 44 formant un premier collet.

L'extrémité de gaine externe d'étanchéité 32 est emmanchée, elle, à l'intérieur de l'extrémité d'un capot cylindrique 34', tandis qu'une seconde bague, ou canule, 36', est emmanchée à l'intérieur de l'extrémité de gaine d'étanchéité 32. L'extrémité de gaine d'étanchéité 32 est sertie entre l'extrémité du capot cylindrique 34' et la seconde bague 36' au moyen d'une pièce annulaire monocône 38'. La seconde bague, ou canule, 36' présente une seconde surface externe cylindrique de révolution 40', et une seconde extrémité interne chanfreinée 42' opposée à une seconde extrémité externe 44' formant un second collet.

La gaine intermédiaire 18 présente une extrémité de gaine intermédiaire 35 qui est emmanchée à l'intérieur de l'embout de fixation 34, tandis qu'une troisième bague ou canule 36", est emmanchée à l'intérieur de l'extrémité 35 de la gaine intermédiaire. L'extrémité de la gaine intermédiaire 35 est sertie entre l'embout de fixation 34 et la troisième bague 36" au moyen de la pièce annulaire biconique étagée 38. La troisième bague ou canule 36" présente une troisième surface externe cylindrique de révolution 40", et une troisième extrémité interne chanfreinée 42" opposée à une troisième extrémité externe 44" formant un troisième collet.

La qualité de l'étanchéité entre, l'embout 34 et l'extrémité de gaine de pression 30, ou l'extrémité du capot cylindrique 34' et l'extrémité de gaine 32, ou encore l'embout 34 et l'extrémité de gaine intermédiaire 35, dépend respectivement de la régularité de l'épaisseur de l'extrémité de gaine en prise, entre la première bague 36 et le manchon 34, pour l'extrémité de gaine de pression 30, entre la seconde bague 36' et l'extrémité du capot cylindrique 34' pour l'extrémité de gaine externe 32, et entre la troisième bague 36" et le manchon 34 pour l'extrémité de la gaine intermédiaire 35.

Aussi, il est essentiel de venir égaliser l'épaisseur de ces trois extrémités de gaine, car naturellement, compte tenu du mode de réalisation des gaines, leur épaisseur n'est pas constante.

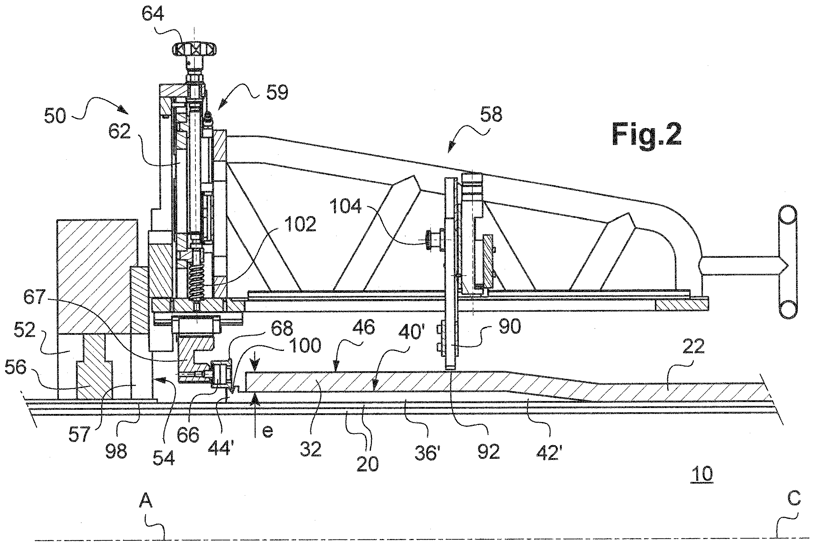

On se référera à la figure 2, illustrant partiellement la conduite tubulaire flexible débarrassée de certains de ses éléments, et plus précisément la seconde bague, ou canule, 36' emmanchée à l'intérieur de l'extrémité de gaine externe d'étanchéité 32. Cette dernière définit une bordure circulaire externe 46 libre correspondant à une portion dans laquelle la seconde bague 36' est emmanchée. En outre, une gorge de guidage, que l'on décrira ci-après, est ménagée dans le collet 44', et elle débouche radialement à l'opposé de l'intérieur de la conduite.

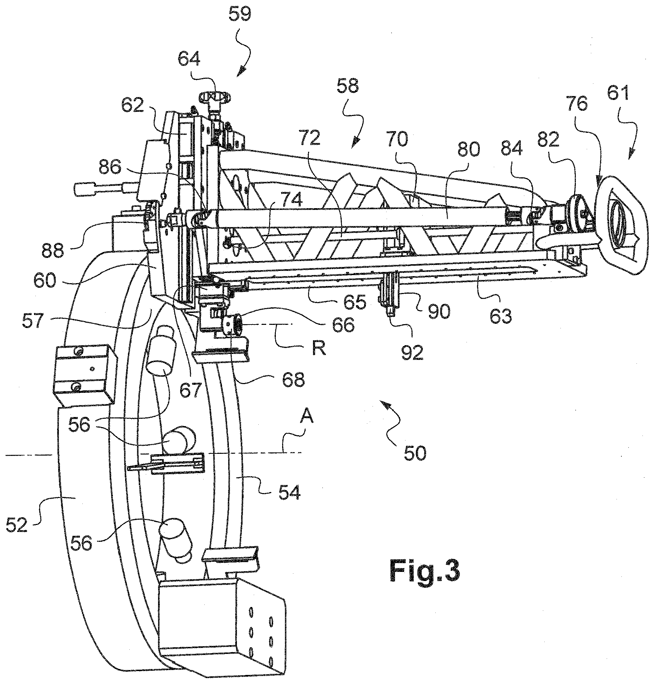

Aussi, la bordure circulaire externe 46 va alors être arasée au moyen d'une installation 50, et que l'on décrira d'abord en détail en référence aux figures 3 et 4.

On se référera tout d'abord à la figure 3 montrant l'installation de montage 50 selon l'invention. Elle présente un support circulaire 52 et une roue d'entraînement 54 montée rotative sur le support circulaire 52, selon un axe de symétrie A. La roue d'entraînement 54 est entraînée en rotation par rapport au support circulaire 52 au moyen d'une motorisation électrique non représentée. Le support circulaire 52 est équipé, à l'intérieur, de vérins 56 s'étendant radialement vers le centre, et permettant de venir en prise sur un élément cylindrique qui lui-même sera déjà en prise sur la conduite tubulaire flexible, ou sur un noyau de la conduite comme on l'expliquera ci-après.

La roue d'entraînement 54 définit une bordure périphérique 57 et l'installation 50 comprend un bras support 58, installé sur la bordure périphérique 56 et qui s'étend parallèlement à l'axe de symétrie A de la roue d'entraînement 54 entre une extrémité de liaison 59 et une extrémité libre 61. Le bras support 58 et la roue d'entraînement 54 sont reliés ensemble au moyen d'une platine 60 montée en position fixe sur la roue d'entraînement 54. La platine 60 est équipée de glissières 62, et l'extrémité de liaison 59 du bras support 58, est montée coulissante dans les glissières 62, selon une direction radiale. Il est néanmoins maintenu sensiblement perpendiculairement à la platine 60. Et au surplus, il y est relié avec un organe de réglage 64 équipée de moyens élastiques et permettant de régler la position radiale du bras support 58 par rapport à la platine 60.

Aussi, le bras support 58 comporte une table de guidage 65 s'étendant longitudinalement de l'extrémité de liaison 59 à l'extrémité libre 61 et parallèlement à l'axe de symétrie A de la roue d'entraînement 54. Une lumière oblongue 63 est pratiquée longitudinalement dans la table de guidage 65.

En outre, le bras support 58 est équipé d'un galet de guidage 66 qui s'étend en saillie de la table de guidage 65, en direction de l'axe de symétrie A de la roue d'entraînement 54. Le galet de guidage 66 présente une embase support 67 montée coulissante sous la table de guidage 65, selon une direction parallèle à l'axe de symétrie A de la roue d'entrainement 54, entre une position rapprochée de la platine 60 et une position écartée de la platine 60. L'axe de rotation R du galet de guidage 66 s'étend sensiblement parallèlement à l'axe de symétrie A. De plus, le galet de guidage 66 présente une collerette 68 à son extrémité.

Le bras support 58 est muni, à l'intérieur, d'un chariot mobile 70 en translation, selon une direction parallèle à l'axe de symétrie A de la roue d'entraînement 54, entre l'extrémité de liaison 59 l'extrémité libre 61 du bras support 58. En outre, le chariot 70 présente un taraudage traversé par une tige filetée 72 qui s'étend elle-même à travers le bras support 58 parallèlement à l'axe de symétrie A. La tige filetée 72 présente une première extrémité 74 montée à rotation dans un premier palier au niveau de l'extrémité de liaison 59 du bras support 58, et une seconde extrémité 76 équipée d'une petite roue 78 illustrée sur la seule figure 4.

En revenant sur la figure 3, on observe que la petite roue 78 est couplée en rotation à un arbre de transmission 80 au moyen d'une grande roue 82. L'arbre de transmission 80 est lui couplé, à l'une de ses extrémités, à la grande roue 82 au moyen d'un premier joint de cardan 84, et à l'autre de ses extrémités, au moyen d'un second joint de cardan 86, à une roue d'incrémentation 88 installée sur la platine 60, et par conséquent en déporté par rapport aux glissières 62. On observera que la roue d'incrémentation 88 est installée sensiblement à l'aplomb de la roue d'entraînement 54. Au surplus, l'arbre de transmission 80 présente deux parties emmanchées l'une dans l'autre et montées à coulissement, de manière à ce que les deux joints de cardan 84 et 86 puissent être entraînés en translation l'un par rapport à l'autre tout en conservant leurs propriétés.

En outre, le chariot mobile 70 est équipé d'un porte-outil 90 qui s'étend radialement en saillie de la table de guidage 65 à travers l'évidement oblong 63, vers l'axe de symétrie A de la roue d'entraînement 54, lequel porte outil 90 est muni d'un outil de coupe 92. L'outil de coupe 92 présente une arrête tranchante sensiblement parallèle à l'axe de symétrie A. Le porte-outil 90 est équipé d'un organe de réglage non représenté sur la figure 3 et qui permet d'ajuster radialement la position relative de l'outil de coupe 92 par rapport au galet de guidage 66.

On se reportera à nouveau sur la figure 4 illustrant en élévation l'installation de montage 50 en vue de dessus par rapport à sa représentation sur la figure 3. On y retrouve l'arbre de transmission déporté 80, le chariot mobile 70 traversé par la vis sans fin 72, le couplage de l'arbre de transmission 80 et de la vis sans fin 72 grâce à la petite roue 78 et à la grande roue 76 et par l'intermédiaire d'une courroie de transmission 94.

On retrouve également sur cette figure le support circulaire 52 sur lequel est installé un doigt d'incrémentation 96, à la périphérie, et qui est apte à coopérer avec la roue d'incrémentation 88, afin de provoquer sa rotation d'une fraction de tour, comme on l'expliquera plus en détail dans la suite de la description. On observera que le doigt d'incrémentation 96 est mobile entre une position active, en saillie et une position inactive rétractée, et qu'il est apte à être maintenu en position fixe dans l'une ou l'autre de ces positions.

Avant de se reporter de nouveau sur la figure 2, de façon à décrire le fonctionnement de l'installation 50 permettant l'usinage de la bordure circulaire externe 46, on décrira plus en détail sur la figure 6, la bague, ou canule 36'. Elle est ici représentée en coupe axiale, et on retrouve ses deux extrémités cylindriques opposées, une extrémité interne chanfreinée 42' et une extrémité externe 44' formant un collet. L'extrémité chanfreinée 42' est interne car elle vient s'engager à l'intérieur de l'extrémité de gaine, tandis que l'extrémité formant un collet est dite externe, car elle s'étend en saillie et en dehors de l'extrémité de gaine. Grâce au chanfrein, l'extrémité chanfreinée 42' est plus aisée à emmancher à l'intérieur de l'extrémité de gaine.

En outre, comme indiqué plus haut, l'extrémité externe 44' formant collet, présente une gorge de guidage 100 permettant de recevoir le galet de guidage 66 comme on va l'expliquer ci-après. La gorge de guidage 100 est ici en V, de manière à n'autoriser aucun un jeu axial comme on l'expliquera ci-après. D'autres profils de gorge de guidage sont envisagés, en coopération de forme avec le profil du galet de guidage 66, de manière à éviter le jeu axial.

Ainsi, tel que représenté sur la figure 2, le support circulaire 52 est tout d'abord maintenu en position fixe par rapport à l'extrémité de la gaine d'étanchéité externe 22 par l'intermédiaire du noyau de la conduite, par exemple enveloppé d'une couche de protection 98. Le noyau de la conduite inclut le prolongement des couches sous-jacentes.

Grâce aux vérins de centrage 56 on vient régler la position relative de la roue d'entraînement 54 et de la conduite de manière à ce que l'axe de symétrie A de la roue d'entraînement 54 soit sensiblement confondu avec l'axe D de la bague 36'. Une telle position idéale est malaisée à obtenir, notamment parce que la face externe du noyau de la conduite sur lequel prennent appui les vérins 56 peut être fortement ovalisée. En revanche, il est relativement aisé d'obtenir le parallélisme de l'axe de symétrie A de la roue d'entraînement 54 et de l'axe D de la bague 36'. En effet, par construction, le collet 44' présente une face latérale plane perpendiculaire à l'axe C. De plus, par construction, les axes des vérins 56 sont coplanaires et perpendiculaires à l'axe de la roue d'entrainement 54. Par suite, pour régler le parallélisme entre les axes A et C, il suffit de régler le parallélisme entre d'une part le plan latéral du collet 44' et d'autre part le plan contenant les axes des vérins 56, ce qui peut aisément se faire par calage. En pratique, juste avant le serrage des vérins 56, trois cales de longueur identique sont disposées en appui contre la face latérale plane du collet 44', parallèlement à l'axe C, le long de trois génératrices distinctes de la bague 36' (préférentiellement trois génératrices à 120°). Puis le support circulaire 52 est déplacé jusqu'à ce que trois des vérins 56 viennent en appui latéral contre ces trois cales. Une fois cette position obtenue, les vérins 56 sont serrés et les cales peuvent être retirées.

Un tel réglage permet d'obtenir un bon parallélisme entre les axes A et C. Cependant, il ne permet pas de contrôler et de minimiser aisément la distance séparant les axes A et C. En pratique, une fois ce réglage effectué, l'excentration de la roue d'entraînement 54 par rapport à la bague 36' peut être de l'ordre de plusieurs millimètres, typiquement entre 5mm et 10mm. Cependant, l'installation 50 permet de s'affranchir totalement de ce défaut de coaxialité, grâce aux glissières 62 comme on va l'expliquer.

Dans cette situation, le bras support 58 s'étend parallèlement à l'axe de la conduite C. On vient alors ajuster le galet de guidage 66 et plus précisément sa collerette 68 à l'intérieur de la gorge de guidage 100. On observera que la mise en place de la collerette 68 à l'intérieur de la gorge de guidage 100 est facilitée par le fait que l'embase support 67 du galet de guidage 66 est montée coulissante par rapport à la roue d'entrainement 54 selon un axe parallèle à l'axe de symétrie A de la roue d'entraînement 54. Il est donc aisé de déplacer le galet de guidage 66 parallèlement à l'axe A pour rechercher une position dans laquelle la collerette 68 est située en face de la gorge de guidage 100.

On observera aussi que l'organe de réglage 64 permet de faire varier la distance radiale entre le galet de guidage 66 et l'axe de symétrie A, ce qui permet d'écarter radialement le galet de guidage 66 pendant ce réglage préliminaire. Une fois que la collerette 68 est située en face de la gorge de guidage 100, l'organe de réglage 64 permet d'entraîner le galet de guidage 66 radialement en appui dans la gorge de guidage 100. Au surplus, apparaissent sur cette figure 2, les moyens élastiques 102 décrits plus haut et permettant de maintenir à force le galet de guidage 66 contre le collet 44'.

Ensuite, on vient ajuster manuellement le porte-outil 90 dans une position rapprochée du galet de guidage 66 en entraînant en rotation la tige filetée 72 qui n'apparaît pas sur cette figure. Aussi, on vient régler la position radiale du porte-outil 90 au moyen de l'organe de réglage 104 défini plus haut, de façon à venir appliquer l'outil de coupe 92 contre la bordure circulaire externe 46 libre de l'extrémité de gaine d'étanchéité 32. On observera que la position relative selon une direction radiale du galet de guidage 66 et de l'outil de coupe 92, va alors déterminer l'épaisseur e de l'extrémité de gaine d'étanchéité 32 durant l'usinage.

La roue d'entraînement 54 est alors entraînée en rotation au moyen de la motorisation électrique, et partant, le bras 58 est lui-même entraîné en rotation autour de la bordure circulaire externe 46. De ce fait, l'outil de coupe 92 vient araser la bordure circulaire externe 46, selon sa circonférence, en formant un copeau.

L'outil de coupe 92 est maintenu à une distance donnée de la surface externe cylindrique de révolution 40' grâce au galet de guidage 66, dont la collerette 68 est maintenue radialement dans la gorge 100. Le défaut de coaxialité est alors compensé grâce aux moyens élastiques 102, et aux glissières 62 à l'intérieur desquelles l'extrémité de liaison 59 du bras support 58 va pouvoir osciller en translation durant la rotation du bras support 58.

Ainsi, à chaque tour, le galet de guidage 66 demeure en contact avec le collet 44' de la bague 36', tandis que l'extrémité de liaison 59 est entraînée en translation alternativement dans les glissières 62 selon une période.

Au surplus, à chaque tour de la roue d'entraînement 54, la roue d'incrémentation 88 vient en prise avec le doigt d'incrémentation 96, illustrés sur la figure 4.

De la sorte, la roue d'incrémentation 88 est entraînée en rotation d'une fraction de tour et grâce à l'arbre de transmission 80, elle provoque la rotation de la vis sans fin 72 d'une fraction de tour également, par l'intermédiaire des petite 78 et grande 82 roues, et de la courroie d'entraînement 94 qui les couple. Cette transmission est assurée malgré les mouvements relatifs du bras support 58 et de la platine 60, et partant de la roue d'incrémentation 88, durant la rotation de la roue d'entraînement 54, grâce aux joints de cardan 84, 86 et à l'arbre de transmission 80 en deux parties coulissantes. Ainsi, les axes de rotation de la grande roue 82 et de la roue d'incrémentation 88, sensiblement parallèles, sont alternativement écartés et rapprochés l'un de l'autre selon une direction perpendiculaire qu'ils définissent, tandis que leur couplage en rotation demeure.

La rotation de la tige sans fin 72 provoque à son tour, l'entraînement en translation du chariot 70 et partant, l'entraînement en translation de l'outil de coupe 92 d'une amplitude donnée. Cette amplitude est déterminée par l'incrément angulaire de la roue d'incrémentation 88, par le rapport de transmission entre la petite roue 78 et la grande roue 76, et par le pas de la vis sans fin 72. Cette amplitude est prévue pour être inférieure à la largeur de l'outil de coupe 92. De la sorte, la surface entière de la bordure circulaire externe 46 peut être usinée.

Ainsi, grâce à l'installation décrite ci-dessus et à la méthode qu'elle met en oeuvre, on obtient une extrémité 32 de la gaine d'étanchéité externe 22, dont l'épaisseur e est homogène et sensiblement constante sur toute la partie usinée.

Ainsi, l'écart entre les épaisseurs maximale et minimale de la gaine dans la partie usinée est typiquement inférieur à un dixième de millimètres. De plus, l'état de surface de la partie usinée de la gaine est très bon. Par suite, cette méthode d'usinage améliore nettement la qualité et la fiabilité du sertissage d'étanchéité de la gaine.

On comprend également que, l'installation permet également d'usiner l'extrémité de la gaine intermédiaire 18 ou bien même de la gaine de pression 12 représentés sur la figure 1.

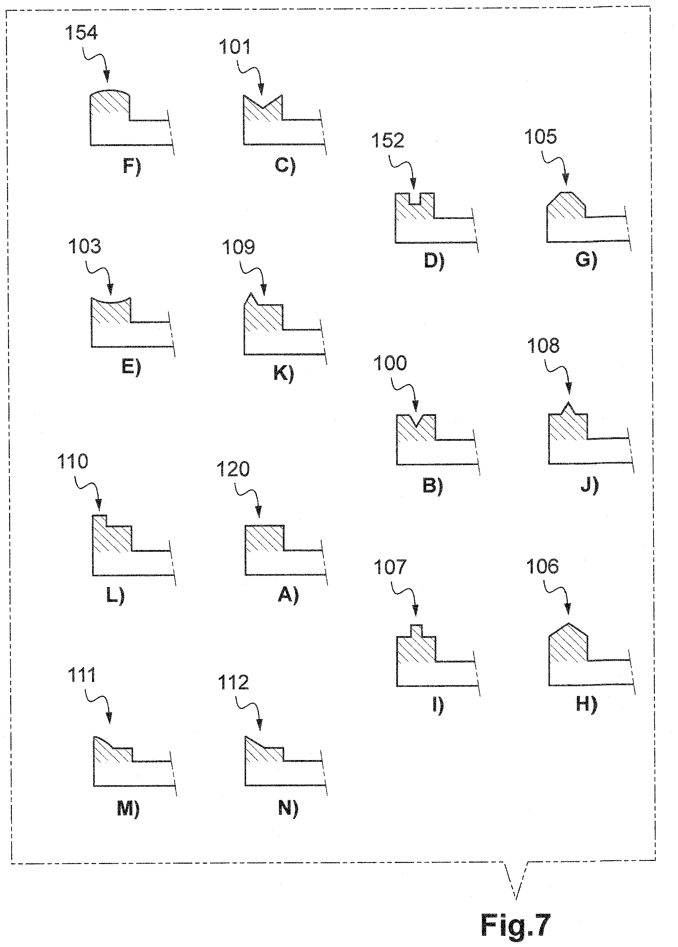

La Figure 7 illustre en détail une pluralité de modes de réalisation du collet 44' de la bague 36' tel que représenté sur la Figure 6. L'invention peut être mise en oeuvre avec un collet tel que présenté sur la Figure 7A, présentant une face supérieure plane 120, ou plus précisément une surface cylindrique externe de révolution. Le parallélisme entre l'axe de symétrie A de la roue d'entrainement 54 et l'axe D de la bague 36', est alors précisément réglé de manière à ce que le galet de guidage 66 demeure en contact avec le collet 44' sans perdre son appui sur sa face supérieure.

Avantageusement, le collet 44' et le galet de guidage 66 présentent des moyens permettant de limiter les possibilités de déplacement axial du galet de guidage 66 par rapport au collet 44'. Ces moyens de guidage peuvent par exemple être mis en oeuvre en pratiquant une gorge 100 dans la surface cylindrique externe de révolution, telle que représentée en détail sur la Figure 7B et sur la Figure 6, tandis que le galet de guidage 66 illustré sur les Figures 2 et 3 est, lui, équipé d'une collerette 68 apte à pénétrer à l'intérieur de cette gorge 100.

D'autres profils de gorge, 101, 152 et 103 sont représentés respectivement sur les Figures 7C, 7D et 7E.

On observera que le galet de guidage 66 dispose de deux degrés de liberté par rapport à la roue d'entrainement 54. D'une part, il peut se déplacer selon une direction parallèle à l'axe A du fait que l'embase support 67 est montée coulissante par rapport à la roue d'entrainement 54. D'autre part, il peut se déplacer radialement du fait des moyens élastiques 102. Par suite, même si les axes A et D ne sont pas parfaitement parallèles, la collerette 68 du galet de guidage 66 est maintenue en permanence dans la gorge 100 sans risque de déraillement, ces deux degrés de liberté permettant au galet de guidage 66 de se déplacer par rapport à la roue d'entrainement 54 pour accommoder ce défaut de parallélisme.

Il est également possible d'intervertir les rôles du galet de guidage 66 et du collet 44' en pratiquant une gorge dans le galet de guidage 66 et en ménageant une collerette de collet sur le collet 44'. Ainsi, les Figures 7F à 7N illustrent respectivement différents profils de collerette de collet anguleux ou arrondis 154, 105, 106, 107, 108, 109, 110, 111, 112.

Aussi, le galet de guidage 66 présente différentes formes de gorge dont le profil est apte à coopérer avec les différents profils de collerette de collet.

Selon un mode de réalisation de l'invention, le bras support 58 est allongé de sorte que la course totale du chariot mobile 70 soit nettement supérieure à la longueur des bagues 36, 36', 36", par exemple que cette course soit de l'ordre de 50 centimètres. Dans ce cas, il est possible d'usiner plusieurs extrémités de gaine en laissant la couronne support 52 dans la même position par rapport à la conduite flexible. Ceci permet de gagner du temps en évitant d'avoir à déplacer la couronne support 52 entre deux usinages. Cette solution peut avantageusement être utilisée pour usiner successivement les extrémités de la gaine intermédiaire 35 et de la gaine externe 32. On observera cependant que les axes des deux bagues 36', 36" ne sont pas nécessairement parallèles, si bien qu'on ne pourra pas positionner la couronne support 52 de sorte que l'axe de la roue d'entrainement 54 soit simultanément parallèle aux axes des deux bagues 36', 36", ce qui peut avoir pour inconvénient de réduire la précision de l'usinage de l'une des deux extrémités de gaine. Dans le cas d'espèce, la couronne support 52 est avantageusement alignée et centrée par rapport à la troisième bague 36" de façon à privilégier la précision d'usinage de l'extrémité de la gaine intermédiaire 35.

## Revendications

1. Méthode de montage d'un embout de fixation d'une conduite tubulaire flexible, ladite méthode étant du type comprenant les étapes suivantes :
a) on fournit, d'une part un embout et une bague (36, 36', 36") présentant une surface externe cylindrique de révolution (40, 40', 40") et deux extrémités cylindriques opposées (42, 44 ; 42', 44' ; 42", 44"), et d'autre part une gaine présentant une extrémité de gaine (30 ; 35 ; 32) et une bordure circulaire externe (46 ; 46' ; 46") située au niveau de ladite extrémité de gaine ;
b) on emmanche ladite bague (36, 36', 36") à l'intérieur de ladite extrémité de gaine (30 ; 35 ; 32) ;
c) on arase ladite bordure circulaire externe (46 ; 46' ; 46") pour former une bordure arasée de symétrie cylindrique de révolution sensiblement coaxiale à ladite surface externe cylindrique (40, 40', 40") ;
d) on vient coiffer ladite bordure arasée avec ledit embout pour pouvoir sertir ladite extrémité de gaine entre ladite bague et ledit embout; et, à l'étape b) on emmanche ladite bague (36, 36', 36") en laissant une desdites deux extrémités (44 ; 44' ; 44") s'étendre en dehors de ladite extrémité de gaine (30 ; 35 ; 32),
**caractérisée en ce qu'**à l'étape c), on arase ladite bordure circulaire externe (46 ; 46' ; 46") à une distance radiale donnée de ladite surface externe cylindrique (40, 40', 40") en prenant appui sur ladite une desdites deux extrémités de bague (44 ; 44' ; 44").

2. Méthode de montage selon la revendication 1, **caractérisée en ce qu'**à l'étape c), on fournit un outil de coupe (92) et on maintient ledit outil de coupe contre ladite bordure circulaire externe (46 ; 46' ; 46") à ladite distance radiale donnée de ladite surface externe cylindrique (40, 40', 40"), tandis qu'on entraine ledit outil de coupe (92) en rotation autour de ladite bague (36, 36', 36").

3. Méthode de montage selon la revendication 2, **caractérisée en ce qu'**on entraîne en outre ledit outil de coupe (92) en translation selon la direction axiale de ladite bague (36, 36', 36").

4. Méthode de montage selon la revendication 3, **caractérisée en ce qu'**on entraîne ledit outil de coupe (92) en translation d'une amplitude de course donnée à chaque tour dudit outil de coupe (92).

5. Méthode de montage selon l'une quelconque des revendications 1 à 4, **caractérisée en ce qu'**on fournit une bague (36, 36', 36") présentant une gorge de guidage (100) sur ladite une desdites deux extrémités de bague (44 ; 44' ; 44").

6. Méthode de montage selon l'une quelconque des revendications 1 à 5, **caractérisée en ce qu'**on fournit une bague dont ladite une desdites deux extrémités de bague (44 ; 44' ; 44") présente un collet d'appui.

7. Méthode de montage selon les revendications 5 et 6, **caractérisée en ce qu'**on fournit une bague présentant ladite gorge de guidage (100) ménagée sur ledit collet d'appui.

8. Installation (50) pour le montage d'un embout de fixation d'une conduite tubulaire flexible, ladite conduite tubulaire flexible comprenant, d'une part une gaine présentant une extrémité de gaine (30 ; 35 ; 32) et une bordure circulaire externe (46 ; 46' ; 46") située au niveau de ladite extrémité de gaine, et d'autre part une bague (36, 36', 36") présentant une surface externe cylindrique de révolution (40, 40', 40") et deux extrémités cylindriques opposées (42, 44 ; 42', 44' ; 42", 44"), ladite bague étant emmanchée à l'intérieur de ladite extrémité de gaine en laissant une desdites deux extrémités (44 ; 44' ; 44") s'étendre en dehors de ladite extrémité de gaine ;
ladite installation comprenant
- une roue d'entraînement (54) présentant un axe de symétrie A et une bordure périphérique (57),
**caractérisée en ce qu'**elle comprend:
- un bras support (58) monté mobile en translation sur ladite bordure périphérique selon une direction radiale et s'étendant sensiblement parallèlement audit axe de symétrie A,
- un outil de coupe (92) et un organe d'appui (66) montés sur ledit bras support (58), ledit organe d'appui (66) étant apte à prendre appui sur ladite une desdites extrémités de bague (44 ; 44' ; 44") pour maintenir ledit outil de coupe (92) contre ladite bordure externe (46 ; 46' ; 46") à une distance radiale donnée de ladite surface externe cylindrique (40, 40', 40"),
et **en ce que** ledit outil de coupe (92) est destiné à être entraîné en rotation autour de ladite bague (36, 36', 36"), de manière à araser ladite bordure externe (46 ; 46' ; 46") pour former une bordure arasée de symétrie cylindrique de révolution sensiblement coaxiale à ladite surface externe cylindrique (40, 40', 40").

9. Installation selon la revendication 8, **caractérisée en ce qu'**elle comprend des organes élastiques (102) pour contraindre ledit bras support (58) vers le centre de ladite roue d'entraînement (54).

10. Installation selon la revendication 8 ou 9, **caractérisée en ce que** ledit outil de coupe (92) est monté mobile en translation sur ledit bras support (58) selon une direction parallèle audit axe de symétrie A.

11. Installation selon l'une quelconque des revendications 8 à 10, **caractérisée en ce que** ledit organe d'appui (66) comporte un galet présentant un axe de rotation sensiblement parallèle audit axe de symétrie A.

12. Installation selon l'une quelconque des revendications 8 à 11, **caractérisée en ce qu'**elle comprend un support (52) apte à recevoir ladite roue d'entraînement (54), ledit support étant destiné à maintenir ladite roue d'entraînement (54) et ladite conduite tubulaire flexible sensiblement coaxialement.

## Patentansprüche

1. Verfahren zur Montage einer Armatur zur Befestigung einer flexiblen Rohrleitung, wobei das Verfahren vom Typ ist, umfassend die folgenden Schritte:
a) Bereitstellen einerseits einer Armatur und eines Rings (36, 36', 36"), der eine rotationszylindrische Außenoberfläche (40, 40', 40") und zwei gegenüberliegende Enden (42, 44; 42', 44'; 42", 44") aufweist, und andererseits einer Hülle, die ein Hüllenende (30; 35; 32) und eine äußere kreisförmige Einfassung (46; 46'; 46"), die sich im Bereich des Hüllenendes befindet, aufweist;
b) Einschieben des Rings (36, 36', 36") in das Innere des Hüllenendes (30; 35; 32);
c) Nachschneiden der äußeren kreisförmigen Einfassung (46; 46'; 46"), um eine nachgeschnittene Einfassung mit rotationszylindrischer Symmetrie zu bilden, die zu der zylindrischen Außenoberfläche (40, 40', 40") im Wesentlichen koxial ist;
d) Bedecken der nachgeschnittenen Einfassung mit der Armatur, um das Hüllenende zwischen den Ring und die Armatur quetschen zu können; und,
in Schritt b) Einschieben des Rings (36, 36', 36"), wobei eines der zwei Enden (44; 44'; 44") sich weiterhin außerhalb des Hüllenendes (30; 35; 32) erstreckend belassen wird;
**dadurch gekennzeichnet, dass** in Schritt c) die äußere kreisförmige Einfassung (46; 46'; 46") in einem bestimmten radialen Abstand von der zylindrischen Außenoberfläche (40, 40', 40") nachgeschnitten wird, indem eine Abstützung auf dem einen der zwei Ringenden (44; 44'; 44") erfolgt.

2. Montageverfahren nach Anspruch 1, **dadurch gekennzeichnet, dass** in Schritt c) ein Schneidewerkzeug (92) bereitgestellt wird und das Schneidewerkzeug gegen die äußere kreisförmige Einfassung (46; 46'; 46") in dem bestimmten radialen Abstand von der zylindrischen Außenoberfläche (40, 40', 40") gehalten wird, während das Schneidewerkzeug (92) zur Drehung um den Ring (36, 36', 36") angetrieben wird.

3. Montageverfahren nach Anspruch 2, **dadurch gekennzeichnet, dass** das Schneidewerkzeug (92) ferner zur Translation in der axialen Richtung des Rings (36, 36', 36") angetrieben wird.

4. Montageverfahren nach Anspruch 3, **dadurch gekennzeichnet, dass** das Schneidewerkzeug (92) zur Translation mit einer bestimmten Hubamplitude bei jeder Umdrehung des Schneidewerkzeugs (92) angetrieben wird.

5. Montageverfahren nach einem der Ansprüche 1 bis 4, **dadurch gekennzeichnet, dass** ein Ring (36, 36', 36") bereitgestellt wird, der eine Führungsrille (100) auf einem der zwei Ringenden (44; 44'; 44") aufweist.

6. Montageverfahren nach einem der Ansprüche 1 bis 5, **dadurch gekennzeichnet, dass** ein Ring bereitgestellt wird, bei dem das eine der zwei Ringenden (44; 44'; 44") einen Abstützbund aufweist.

7. Montageverfahren nach Anspruch 5 und 6, **dadurch gekennzeichnet, dass** ein Ring bereitgestellt wird, der die Führungsrille (100) auf dem Abstützbund ausgebildet aufweist.

8. Installation (50) für die Montage einer Armatur zur Befestigung einer flexiblen Rohrleitung, wobei die flexible Rohrleitung einerseits eine Hülle umfasst, die ein Hüllenende (30; 35; 32) und eine äußere kreisförmige Einfassung (46; 46'; 46"), die sich im Bereich des Hüllenendes befindet, aufweist, und andererseits einen Ring (36, 36', 36") umfasst, der eine rotationszylindrische Außenoberfläche (40, 40', 40") und zwei gegenüberliegende Enden (42, 44; 42', 44'; 42", 44") aufweist, wobei der Ring (36, 36', 36") in das Innere des Hüllenendes eingeschoben wird, wobei eines der zwei Enden (44; 44'; 44") sich weiterhin außerhalb des Hüllenendes erstreckend belassen wird;
wobei die Installation Folgendes umfasst:
- ein Antriebsrad (54), das eine Symmetrieachse A und eine umlaufende Einfassung (57) umfasst, **dadurch gekennzeichnet, dass** sie Folgendes umfasst:
- einen Halterungsarm (58), der auf der umlaufenden Einfassung in Translation in einer radialen Richtung beweglich montiert ist und sich im Wesentlichen parallel zu der Symmetrieachse A erstreckt,
- eine Schneidewerkzeug (92) und ein Abstützorgan (66), die auf dem Halterungsarm (58) montiert sind, wobei das Abstützorgan (66) in der Lage ist, sich auf dem einen der Ringenden (44; 44'; 44") abzustützen, um das Schneidewerkzeug (92) gegen die äußere kreisförmige Einfassung (46; 46'; 46") in einem bestimmten radialen Abstand von der zylindrischen Außenoberfläche (40, 40', 40") zu halten,
und dass das Schneidewerkzeug (92) dazu bestimmt ist, zur Drehung um den Ring (36, 36', 36") angetrieben zu werden, derart, dass die äußere Einfassung (46; 46'; 46") nachgeschnitten wird, um eine nachgeschnittene Umrandung mit rotationszylindrischer Symmetrie zu bilden, die zu der zylindrischen Außenoberfläche (40, 40', 40") im Wesentlichen koxial ist.

9. Installation nach Anspruch 8, **dadurch gekennzeichnet, dass** sie Federorgane (102) umfasst, um den Halterungsarm (58) zu der Mitte des Antriebsrads (54) hin zu zwingen.

10. Installation nach Anspruch 8 oder 9, **dadurch gekennzeichnet, dass** das Schneidewerkzeug (92) auf dem Halterungsarm (58) in Translation in einer zu der Symmetrieachse A parallelen Richtung beweglich montiert ist.

11. Installation nach einem der Ansprüche 8 bis 10, **dadurch gekennzeichnet, dass** das Abstützorgan (66) eine Rolle aufweist, die eine Rotationsachse aufweist, die zu der Symmetrieachse A im Wesentlichen parallel ist.

12. Installation nach einem der Ansprüche 8 bis 11, **dadurch gekennzeichnet, dass** sie eine Halterung (52) umfasst, die in der Lage ist, das Antriebsrad (54) aufzunehmen, wobei die Halterung dazu bestimmt ist, das Antriebsrad (54) und die flexible Rohrleitung im Wesentlich koaxial zu halten.

## Claims

1. A method for mounting a securing end fitting for a flexible tubular pipe, said method being of the type comprising the following steps:
a) an end fitting and a ring (36, 36', 36") having an external surface in the form of a cylinder of revolution (40, 40', 40") and two opposite cylindrical ends (42, 44; 42', 44'; 42", 44"), for the one part, and a sheath having a sheath end (30; 35; 32) and an external circular edge (46; 46'; 46") situated at said sheath end, for the other part, are provided;
b) said ring (36, 36', 36") is fitted inside said sheath end (30; 35; 32);
c) said external circular edge (46; 46'; 46") is leveled off to form a leveled edge that has cylindrical symmetry of revolution and is substantially coaxial with said external cylindrical surface (40, 40', 40");
d) said leveled edge is covered with said end fitting so that said sheath end can be crimped between said ring and said end fitting; and
in step b), said ring (36, 36', 36") is fitted with one of said two ends (44; 44'; 44") being allowed to extend out of said sheath end (30; 35; 32),
**characterized**
**in that**, in step c), said external circular edge (46; 46'; 46") is leveled off at a given radial distance from said external cylindrical surface (40, 40', 40") by using said one of said two ring ends (44; 44'; 44") as a support.

2. The mounting method as claimed in claim 1, **characterized in that**, in step c), a cutting tool (92) is provided and said cutting tool is held against said external circular edge (46; 46'; 46") at said given radial distance from said external cylindrical surface (40, 40', 40"), while said cutting tool (92) is driven in rotation about said ring (36, 36', 36").

3. The mounting method as claimed in claim 2, **characterized in that** said cutting tool (92) is also driven in translational movement in the axial direction of said ring (36, 36', 36").

4. The mounting method as claimed in claim 3, **characterized in that** said cutting tool (92) is driven in translational movement with a given stroke amplitude for each turn of said cutting tool (92).

5. The mounting method as claimed in any one of claims 1 to 4, **characterized in that** a ring (36, 36', 36") having a guide groove (100) on said one of said two ring ends (44; 44'; 44") is provided.

6. The mounting method as claimed in any one of claims 1 to 5, **characterized in that** a ring of which said one of said two ring ends (44; 44'; 44") has a bearing collar is provided.

7. The mounting method as claimed in claims 5 and 6, **characterized in that** a ring having said guide groove (100) provided in said bearing collar is provided.

8. An installation (50) for mounting a securing end fitting for a flexible tubular pipe, said flexible tubular pipe comprising a sheath having a sheath end (30; 35; 32) and an external circular edge (46; 46'; 46") situated at said sheath end, for the one part, and a ring (36, 36', 36") having an external surface in the form of a cylinder of revolution (40, 40', 40") and two opposite cylindrical ends (42, 44; 42', 44'; 42", 44"), for the other part, said ring being fitted inside said sheath end with one of said two ends (44; 44'; 44") being allowed to extend out of said sheath end;
said installation comprising
- a drive wheel (54) having an axis of symmetry A and a peripheral edge (57), **characterized in that** it comprises:
- a support arm (58) that is mounted so as to be able to move in translation on said peripheral edge at a radial direction and extends substantially parallel to said axis of symmetry A,
- a cutting tool (92) and a bearing member (66) mounted on said support arm (58), said bearing member (66) being able to use said one of said ring ends (44; 44'; 44") as a support in order to hold said cutting tool (92) against said external edge (46; 46'; 46") at a given radial distance from said external cylindrical surface (40, 40', 40"),
and **in that** said cutting tool (92) is intended to be driven in rotation about said ring (36, 36', 36") so as to level off said external edge (46; 46'; 46") in order to form a leveled edge that has cylindrical symmetry of revolution and is substantially coaxial with said external cylindrical surface (40, 40', 40").

9. The installation as claimed in claim 8, **characterized in that** it comprises elastic members (102) for forcing said support arm (58) toward the center of said drive wheel (54).

10. The installation as claimed in claims 8 or 9, **characterized in that** said cutting tool (92) is mounted so as to be able to move in translation on said support arm (58) in a direction parallel to said axis of symmetry A.

11. The installation as claimed in any one of claims 8 to 10, **characterized in that** said bearing member (66) has a roller that has an axis of rotation substantially parallel to said axis of symmetry A.

12. The installation as claimed in any one of claims 8 to 11, **characterized in that** it comprises a holder (52) that is able to hold said drive wheel (54), said holder being intended to hold said drive wheel (54) and said flexible tubular pipe substantially coaxially.
